# EUROPEAN PATENT SPECIFICATION

(11) **EP 3 217 799 B1**
(45) Date of publication and mention of the grant of the patent: **02.01.2019**
(21) Application number: 15788073.3
(22) Date of filing: 03.11.2015
(51) Int. Cl.: A22B 5/00, A22B 5/08, A22C 17/00

(54) **DEVICE FOR REMOVAL OF LEAF LARD REMNANTS FROM A SLAUGHTERED ANIMAL**
VORRICHTUNG ZUR ENTFERNUNG VON BAUCHSCHMALZÜBERRESTEN VON SCHLACHTTIEREN
DISPOSITIF POUR L'ÉLIMINATION DE LARD RÉSIDUEL D'UN ANIMAL ABATTU

(30) Priority: 12.11.2014 DK 201400661
(43) Date of publication of application: 20.09.2017
(73) Proprietor: Teknologisk Institut, 2630 Taastrup (DK)
(72) Inventor: OLSEN, Kim Schøtt, DK-2630 Taastrup (DK); NIELSEN, Anders Bo, DK-2630 Taastrup (DK); JENSEN, Claus Søndergaard, DK-2630 Taastrup (DK)
(74) Representative: AWA Denmark A/S
(86) International application number: PCT/EP2015/075595
(87) International publication number: WO 2016/074993

(56) References cited:
- EP-A2- 0 836 804
- US-A- 1 722 902
- US-A- 4 063 332
- US-A- 4 901 398
- US-A1- 2003 143 939

## Description

The invention relates to a device and a method for removal of abdominal fat remnants or leaf lard remnants from a slaughtered animal i.e. from a carcass, especially from pigs.

### Background of invention

When an animal is slaughtered, the abdominal cavity of the animal is opened and the guts and the leaf lard are removed. Entirely removal of the leaf lard is usually not possible due to attachment of the lard to the animal body leaving remnants of lard on the abdominal tissue, hereby reducing the value of the abdominal meat. Removal of the leaf lard remnants therefore increases the value of the meat.

Removal of the main part of the abdominal lard or leaf lard from a slaughtered animal or a part thereof, of which the abdominal cavity has been opened beforehand can be performed as described e.g. in EP0706761, EP0836804, EP1029454 or EP1164858. However, in nearly each animal from where leaf lard has been removed remnants of leaf lard will still be present at the abdominal meat of the animal.

Today at the slaughterhouses the leaf lard remnants are removed by scraping or cutting away the remnants e.g. by trimming the meat typically with the use of circular knifes for meat trimming. Such processes require manual handling of the trimming device.

The leaf lard remnant removing device described herein can be manually handled or preferably be mounted on a robot and removal of leaf lard remnants can be performed automatically at the slaughter line. Removal of leaf lard remnants increases the value of the meat especially due to visual appearance of the meat pieces produced when the slaughtered animals are further cut. A cut from a carcass such as a meat part thus has a higher quality by way of a higher market value when leaf lard remnants are removed.

### Summary of invention

The invention relates to a device for removing leaf lard remnants from a slaughtered animal or a part thereof, of which the abdominal cavity has been opened beforehand and the main part of the leaf lard has been removed, which device comprises at least one rotatable rotor, and the rotor comprises
- a longitudinal central kernel with a base end and a front end,
- at least one lamella blade connected to said central kernel, such that each lamella blade protrudes from the central kernel,
- where the at least one lamella blade in a region protrudes more from the central kernel than at the base end and front end of the central kernel, and
- motor connecting means suitable to connect said base end of the central kernel to a motor.

The leaf lard remnant removing device can be incorporated into a system for removing leaf lard remnants from at least one slaughtered animal or a part thereof at a slaughter line, where the abdominal cavity of the at least one slaughtered animal has been opened beforehand and the main part of the leaf lard has been removed, which system comprises
- The leaf lard remnant removing device as described herein, and
- a motor for rotating the rotor, and wherein the motor is connected to motor connecting means, and
- a robot for controlling and moving the rotor along the slaughtered animal, and/or
- animal length determining means for determining the length of a slaughtered animal and/or
- a fixture to support at least a part of a slaughtered animal.

The invention also relates to a method for removing leaf lard remnants from a slaughtered animal or a part thereof, of which the abdominal cavity has been opened beforehand and the main part of the leaf lard has been removed, the method comprises
- Directing the leaf lard remnant removing device as described elsewhere herein towards the abdominal tissue of a slaughtered animal,
- Moving the rotating rotor in touch with and along the abdominal tissue in the region from where the leaf lard has been removed from the slaughtered animal.

At slaughterhouses the method of removing leaf lard remnants from slaughtered animals hanging at a slaughter line may be included in an automatic process by the use of the leaf lard remnant system comprising at least the leaf lard remnant device and a robot

### Brief description of figures

Fig. 1 illustrates a leaf lard remnant removing device.
Fig. 2 illustrates the rotor and lamella blades of the leaf lard remnant removing device.
Fig. 3 illustrates cleaning means of the leaf lard remnant removing device.
Fig. 4 illustrates a slaughtered pig and the end position of the leaf lard remnant removing device.
Fig. 5 illustrates a slaughtered pig supported by fixtures and the start position of the leaf lard remnant removing device.
Fig. 6 illustrates the abdominal tissue of a pig with and without leaf lard remnants.

### Detailed description of the invention

A first object of the invention relates to a device for removing abdominal lard remnants or leaf lard remnants from a slaughtered animal or a part thereof, of which the abdominal cavity has been opened beforehand and the main part of the abdominal lard or leaf lard has been removed, which device comprises at least one rotatable rotor, and the rotor comprises
- a longitudinal central kernel with a base end and a front end,
- at least one lamella blade connected to said central kernel, such that each lamella blade protrudes from the central kernel,
- where the at least one lamella blade in a region protrudes more from the central kernel than at the base end and front end of the central kernel, and
- motor connecting means suitable to connect said base end of the central kernel to a motor.

The longitudinal central kernel with a base end and a front end may also be described as a central axis with a base end and a front end.

The at least one lamella blade may be connected to the central kernel, such that each lamella blade protrudes from the central kernel in such a way that the overall direction of each of the at least one lamella blade is parallel to the axis of the central kernel.

The device for removing leaf lard remnants from a carcass or a part thereof, of which the abdominal cavity has been opened beforehand and the main part of the abdominal lard or leaf lard has been removed, may also be described as a device comprising at least one rotatable rotor, where the rotor comprises
- a longitudinal central kernel with a base end and a front end,
- at least one lamella blade connected to the central kernel with the overall direction of the at least one lamella blade being parallel to the longitudinal central kernel, and such that each lamella blade protrudes from the central kernel, where the at least one lamella blade in a region closer to the front end than to the base end of the central kernel protrudes more from the central kernel than at the base end and front end of the central kernel,
- motor connecting means suitable to connect said base end of the central kernel to a motor.

The at least one lamella blade of the rotor may be at least 4 lamella blades, such as at least 8 lamella blades, e.g. at least 12 lamella blades, at least 16 lamella blades, or at least 20 lamella blades. Preferred are 12-32 lamella blades, such as 18-30 lamella blades, more preferably 20-28 lamella blades, further preferably 22-26 lamella blades. Most preferred are 24 lamella blades.

The lamella blades of the rotor may have a profile corresponding substantially to the form of the belly of the animal to be treated when the slaughtered animal is hanging in the hind legs and the guts and the main part of the leaf lard are removed. Hereby each lamella blade in at least one region may protrude more from the central kernel than at the base end and front end of the central kernel. Preferably this protruding region of the lamella blades may correspond to where the lamella blade touches the fascia of the abdominal wall of a slaughtered animal when the device is in function.

The rotor may when observed perpendicular to the axis of the kernel have an overall shape resembling a pear i.e. it is pear-shaped or cone-shaped. The thick part of the cone-shaped rotor is preferably located closer to the front end of the central kernel than to the base end. Hereby the shape of the rotor reflects the shape of the abdominal cavity from where leaf lard remnants can be removed by the rotor. In an embodiment the at least one lamella blade has a longitudinal direction following the longitudinal axis of the central kernel or is angled to the longitudinal axis with an angel below 60°, such as below 45 °. Preferred is when the longitudinal direction of the lamella blades substantial follows the longitudinal axis of the central kernel, but the lamella blades may also be angled and can hereby have a spiral form around the central kernel. For rotors with at least two lamella blades these lamella blades preferably follow each other in a similar manner along or around the axis of the central kernel. Preferably two lamella blades of a rotor located side by side are parallel to each other and all the lamella blades of the rotor are located with similar distance to the next lamella blade.

In another embodiment the at least one lamella blade has a rim which when in function is in contact with the abdominal tissue of the slaughtered animal and wherein said rim is continuous from the base end to the front end of the central kernel. A continuous or uninterrupted rim of the lamella blades may be present for straight lamella blades and for angled or spiral lamella blades.

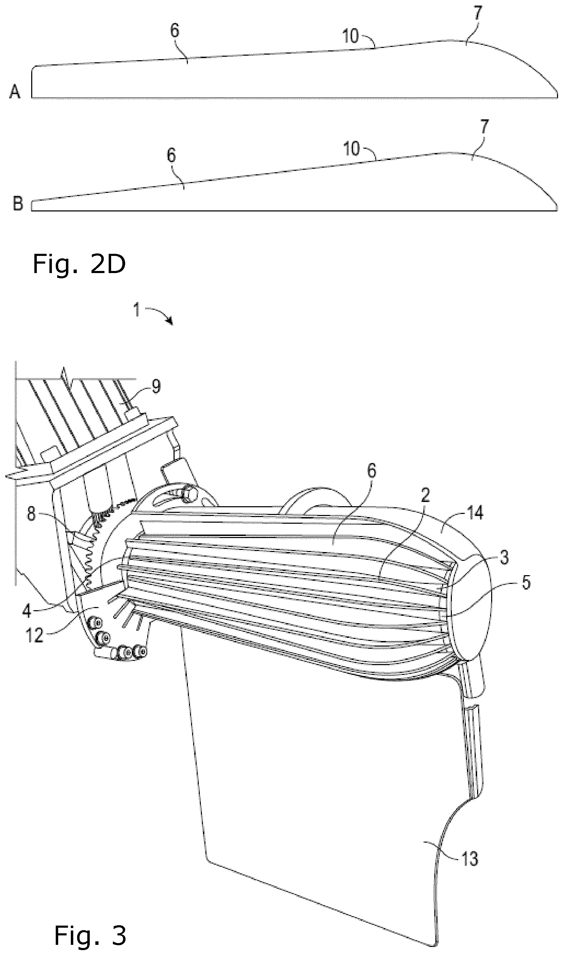

Preferably the continuous rim of lamella blades when this is observed from the side as in Fig 2D has a curved shape. The lamella blades are preferably without angular switchovers along the continuous rim.

In an embodiment every second, third or fourth lamella blade may be higher at the base end of the central kernel than the neighbor lamella blade. Such a design increases the pressure of the rotor towards the abdominal tissue e.g. the belly of the slaughtered animal and makes the lamella blade remove an increased amount of leaf lard remnants than if all the lamella blades are similar in shape.

Each of the lamella blades may have a scraping side and a non-scraping side corresponding to the leading and backward side, respectively, of the lamella blades when the rotor rotates. The leading and thus scraping side of the lamella blades may be substantially perpendicular to the central kernel.

The lamella blades are not sharp as knives i.e. they do not have a cutting blade. The function of the lamella blades is to scrape the leaf lard remnants from the carcass not to cut the leaf lard remnants from the carcass.

The lamella blades may be thicker at the lamella base close to the central kernel than at the rim. The thickness of the base of the lamella blades may be increased due to a non-perpendicular line of non-scraping side of the lamella blades while the scraping side may be perpendicular to the central kernel. Lamella blades which are thicker at the lamella base than at the rim may direct more heat from the central kernel towards the scraping part of the lamella blade preferably giving a more uniform distribution of the heat within the rotor.

The lamella blades can have a thickness at the scraping part of less than 5 mm, such as less than 4 mm, e.g. less than 3 mm, preferably about 2 mm.

The length of straight lamella blades or of the working length of the rotor when lamella blades are angled e.g. spiral formed may correspond substantially to the length measured from the belly strip to the backbone or tender loin of an animal to treat, this length may be between 15 and 40 cm, preferably between 20 and 35 cm, more preferably between 25 and 30 cm, such as about 27 cm.

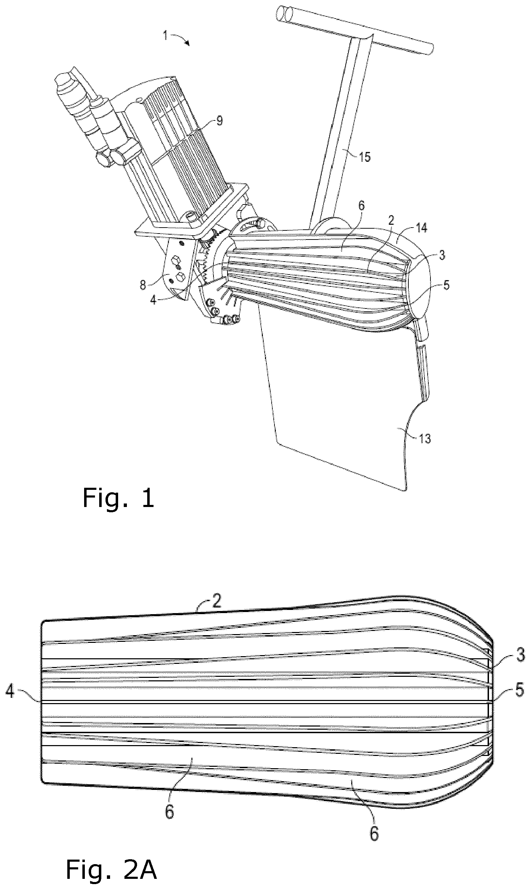

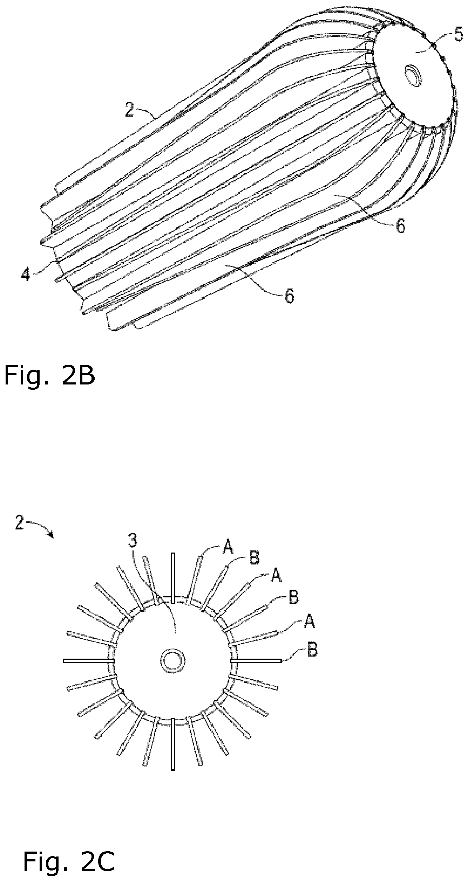

The overall dimension of the rotor as shown in Fig 2 may be about 25 cm from the base end to the front end, a diameter of about 10 cm at the base end including the lamellas in this dimension, a diameter of about 7 cm at the front end and a diameter of about 12.5 cm at the thickest part of the cone-shaped rotor. A rotor of the described size is suitable to remove leaf lard remnants from pigs with a slaughter weight of e.g. 60-110 kg, where the slaughter weight is determined as the carcass without viscera and internal organs.

The scraping off of leaf lard remnants can be performed by the edge of the scraping side of the lamella blades. This edge may be rounded off such that the edge is not sharp. Hereby the maintenance of the lamella blades is reduced. A sharp scraping edge may cause damage to the muscles of the belly or abdominal tissue when in use for removing leaf lard remnants from a slaughtered animal.

The central kernel of the rotor may be a cylindrical central kernel.

The central kernel and lamella blades may be made of food approved materials. The entire rotor comprising the central kernel and the lamella blades can be made of one material e.g. of a metal such as steel, preferred is stainless steel which is long-lasting under the treatment conditions and is easy to clean.

In another layout the central kernel can be made of aluminum and the lamella blades of another food approved material e.g. steel and preferably stainless steel.

The lamella blades are preferably made of a hard material such as metal making the lamella blades inflexible or unbending. Inflexible lamella blades when compared to flexible lamella blades increases the scraping effect upon the abdominal tissue making it possible to increase the amount of removed leaf lard remnants.

Preferably the lamella blades are attached to the central kernel in a non-removable manner. Lamella blades and the central kernel may be molded as one part in a mold or the lamella blades may be grout in position or welded onto the central kernel.

The material of the central kernel and of the lamella blades may be able to stand temperatures of at least 90 °C, such as at least 80°C, preferably of at least 70°C, such as of at least 60°C, most preferably of at least 50°C. The material may be capable of being cleaned based on the requirements at a slaughterhouse including e.g. the use of hot water with or without a detergent. Also the material may be capable of being heated as described elsewhere herein.

In an embodiment the rotor comprises heating means for heating the central kernel and/or the lamella blades. Heating of the rotor may be performed by heating the base end of the central kernel and let the heat distribute passively throughout the central kernel and/or the lamella blades. Heating of the central kernel and/or the lamella blades may also be performed by a heating wire located inside the central kernel and/or the lamella blades or the central kernel and/or the lamella blades may be hollow to allow a heated medium such as a liquid or gas to be circulated inside the rotor. The temperature of the central kernel and/or the lamella blades may reach 90°C or a temperature described elsewhere herein. The heating of the rotor reduces the risk of contaminating the slaughtered animals with micro-organisms when removing leaf lard remnants from two or more slaughtered animals where there is a risk of transmitting micro-organisms from one slaughtered animal to other slaughtered animals. Heating the rotor may thus increase the food safety during a reduction of growth of micro-organism on e.g. the lamella blades and the kernel.

In an embodiment the device comprises cleaning means for removing lard remnants from the lamella blades. Leaf lard remnants removed from a slaughtered animal may fell off the rotor due to gravity of the rotating rotor, however, leaf lard remnants may also stick to the lamella blades and these remnants can be removed from the lamella blades by cleaning means.

The cleaning means may be a block with at least one furrow such that the block can be moved along the lamella blades and push the adhering leaf lard remnants towards the front end of the rotor where the leaf lard remnants will fell off the rotor. A chute as described herein below may direct the leaf lard remnants away from the slaughtered animal when the leaf lard remnants fell off the rotor.

The cleaning means may also have a dimension suitable to clean at least 3 lamella blades in one turn. The cleaning means may be a block with at least two furrows, e.g. at least three furrows, preferably at least four furrows, more preferably at least 5 furrows.

The cleaning means may be activated when a predetermined number of slaughtered animals have been treated. The cleaning means may also be activated each time a slaughtered animal has been treated with the leaf lard remnant removing device, such that when the leaf lard remnant device moves from one slaughtered animal to another slaughtered animal the cleaning means is activated to clean at least a number of the lamella blades of the rotor. Preferably the cleaning means do not rotate together with the rotor when this is in function. The cleaning means may be activated as soon as the rotor is not rotating.

The leaf lard remnant removing device may further comprise a chute located beneath the rotor, where the chute is capable of directing leaf lard remnants away from the slaughtered animal. The chute is for catching released leaf lard remnants and directing the released leaf lard remnants away from the slaughtered animal which is under treatment and hereby avoiding the remnants to stick to the body of the slaughtered animal. When a slaughtered animal is hanging in the hind legs at a slaughter line the leaf lard remnants may stick to the belly or head part of the slaughtered animal if the remnants are not directed away by the chute. Preferably the chute directs released leaf lard remnants downward from the leaf lard remnant removing device.

A screen may surround a part of the rotor outside the lamella blades. The screen directs leaf lard remnants flung away from the lamella blades towards the chute and avoids the remnants to be directed towards the slaughtered animal and stick to the slaughtered animal. The screen may furthermore protect the tender loin from being damaged by the rotating rotor. Preferably the screen surrounds at least 15% of the rotor, such as at least 25% of the rotor. The screen may also surround a part or the entire part of the end of the longitudinal central kernel at the front end of the rotor.

An edge of the screen may be positioned at the rotor and in short distance to the lamella blades such that when the lamella blades scrape the slaughtered animal to loosen leaf blade remnants the leaf blade remnants may be caught by a lamella blade and the edge of the screen and then be pulled from the slaughtered animal.

In an embodiment the leaf lard remnant removing device may further comprise a motor for rotating the rotor, where the motor is connected to the rotor through the motor connecting means. The motor comprises driving means directing the rotor to drive in a direction such that each lamella blade when in contact with a slaughtered animal is moving from downward and up if a slaughtered animal to be treated is hanging with the head downward. The motor may be electrical or hydraulic.

The leaf lard remnant removing device may be connected to a robot for controlling and moving the rotor along the slaughtered animal. The robot may be an industrial robot which is automatically controlled and programmable in three or more axes, and which may be either fixed in place or mobile for use in industrial automation applications. A robot may comprise a single leaf lard remnant removing device and remove leaf lard remnants from one of the halves of carcasses e.g. all the left halves or all the right halves of the carcasses brought forward on the slaughter line, or the robot may use the single leaf lard remnant removing device to remove leaf lard remnants from first one half of a carcass and afterwards from the other half of a carcass and then continue in the same manner with the following carcasses on the slaughter line. A robot may also comprise two leaf lard remnant removing devices and simultaneously remove leaf lard remnants from both of the halves of a carcass and proceed in the same manner with the following carcasses brought forward on the slaughter line.

Animal length determining means may be used in connection with the leaf lard remnant removing device for determine the length of a slaughtered animal to be treated with the leaf lard remnant removing device. The length of the slaughtered animal is used to determine the start and end positions for the rotor within the slaughtered animal when removing leaf lard remnants from the slaughtered animal.

The leaf lard remnant removing device may especially remove leaf lard remnants from the belly in an area starting from the thoracic meat and to the meat in the groin, including the fascia of the abdominal wall (fascia mirror). Preferably the leaf lard remnant removing device is not used on the hide being present on an animal. Preferably the leaf lard membrane is removed before removing leaf lard remnants with the leaf lard remnant removing device as described herein. The leaf lard membrane may be removed together with the leaf lard.

A fixture to fix or support at least a part of a slaughtered animal may be used in connection with the leaf lard remnants removing device as described herein. The fixture can be designed to support or fix a slaughtered animal and to allow the animal muscles to apply resistance to the rotor when leaf lard remnants are removed from the slaughtered animal by the use of the leaf lard remnant removing device as described herein. A fixture may support a slaughtered animal which is hanging at a slaughter line such that the support is provided at least at the ham when the slaughtered animal is hanging in the hind legs. A fixture may also support a slaughtered animal which is hanging at a slaughter line the support may be located at the ham and close to the front legs and/or only at the back of the animal.

The leaf lard remnant removing device may further comprise washing means for cleaning the outer side of the screen. The washing means may spray water at the screen to remove leaf lard remnants sticking to the screen. The washing operation can be performed between every treatment performed by the leaf lard remnant removing device or at per-determined intervals e.g. for each fifth treatment, such as each tenth treatment or the treatment frequency may be determined in relation to the type of animal being treated. Preferably the screen is washed by water with a temperature of between 70-95°C, such as between 75-90°C, e.g. 80-85°C and preferably around 82°C. The washing means may wash the screen in cycles of cold water, hot water and cold water and where the hot water temperature is as described above. Cold water can be water with a temperature of between 35-50°C, such as 40-45°C, preferably about 42°C. One cycle of washing may include about 0.45 mSek of cold water, about 0.45 mSek of hot water and about 0.45 mSek of cold water.

An aspect of the invention relates to a system for removing abdominal lard remnants or leaf lard remnants from at least one slaughtered animal or a part thereof at a slaughter line, where the abdominal cavity of the at least one slaughtered animal has been opened beforehand and the main part of the abdominal lard or leaf lard has been removed, which system comprises
a. The leaf lard remnant removing device as described herein, and
b. a motor for rotating the rotor, and wherein the motor is connected to the motor connecting means, and
c. a robot for controlling and moving the rotor along the slaughtered animal, and/or
d. animal length determining means for determining the length of a slaughtered animal and/or
e. a fixture to fix or support at least a part of a slaughtered animal.

A system for removing abdominal lard remnants or leaf lard remnants may comprise a leaf lard removing device including a rotor connected to a motor by motor connecting means and a robot for moving the leaf lard removing device towards slaughtered animals. Preferably the leaf lard removing device of the system further comprises a screen and optionally a chute.

An automatic system to be installed at a slaughterhouse in a slaughter line to remove leaf lard remnants from slaughtered animals may include the leaf lard remnant removing device as described herein, a motor for rotating the rotor, a robot for controlling and moving the rotor, animal length determining means for determining the length of a slaughtered animal before being treated with the leaf lard remnant removing device and a fixture to fix or support at least a part of a slaughtered animal.

An aspect of the invention relates to a method for removing leaf lard remnants from a slaughtered animal or a part thereof, of which the abdominal cavity has been opened beforehand and the main part of the abdominal lard or leaf lard has been removed, the method comprises
- Directing the leaf lard remnant removing device as described elsewhere herein towards the abdominal tissue of a slaughtered animal,
- Moving the rotating rotor in touch with and along the abdominal tissue in the region from where the leaf lard has been removed from the slaughtered animal.

The method of removing leaf lard remnants can be performed on slaughtered animals hanging with the head downward, where the device as described herein is moved in a direction from below and upward and the rotating rotor is rotating in a directing such that the lamella blades rotate along the abdominal tissue in a direction corresponding to the overall direction of the movement of the leaf lard remnant removing device and such that removed leaf lard remnants are transported by the rotor upward and away from the abdominal tissue.

In an embodiment the method can be performed with heated central kernel and/or heated lamella blades of the rotor. Heating the device may fulfil hygiene requirements at slaughterhouses as growth of some microorganisms is reduced or avoided but most microorganisms are destroyed due to the increased temperature.

When the leaf lard remnant removing device is in function, the temperature of the central kernel may be higher than the temperature of the lamella blades. The temperature of the lamella blades are preferably above 37°C, such as above 40°C, e.g. above 45°C. Preferably the temperature of the lamella blades are below 80°C, such as below 70°C, e.g. below 60°C, such as below 50°C. Preferred is a temperature of the lamella blades of between 37-70°C, more preferably of 40-60°C, further preferably of 45-50°C, most preferably about 47°C. The temperature of the rotor and especially of the lamella blades should preferably be below a temperature where the leaf lard remnants stick to the material of the rotor and burn. The temperature of the lamella blades can be measured at the lamella base close to the central kernel.

When removing leaf lard remnants with the leaf lard remnant removing device, the device may be pressed against the abdominal tissue. The pressure increases the contact between the lamella blades and the abdominal tissue hereby increasing the amount of leaf lard remnants being removed. The pressure should preferably be such that the abdominal tissue is not damaged by the lamella blades. The pressure may be a springy pressure towards the abdominal tissue of the slaughtered animal i.e. the animal body provides a back pressure to the lamella blades e.g. by being supported or fixed as described elsewhere herein. The springy pressure may decrease the risk of damaging the abdominal tissue.

The slaughtered animal can be at least partly supported or fixed before the rotor of the leaf lard remnant removing device is moved along the abdominal tissue of the slaughtered animal. Support or fixation of the slaughtered animal may be performed as described elsewhere herein.

In an embodiment the method of removing leaf lard remnants can be performed automatically at a slaughter line. Hereby a slaughtered animal is transported towards the system for removing leaf lard remnants, the animal body is caught by a fixture to support the body, the leaf lard remnant removing device is directed towards the inner side of the animal body where the rotating rotor may remove leaf lard remnants from the abdominal tissue and then the leaf lard remnant removing device can be withdrawn from the animal body and moved towards another slaughtered animal.

The method for removing leaf lard remnants from a slaughtered animal hanging in the hind legs may comprise a working way of the rotor starting in the area of the breastbone and ending in the area of the groin and where the rotor is moved along the belly with the rotor rotating in a directing such that the lamella blades rotate along the belly in a direction corresponding to the direction of the movement of the rotor. The rotation direction of the rotor is thus from below and upward and then away from the abdominal tissue of the slaughtered animal.

Removal of leaf lard remnants with the leaf lard remnant removing device described herein can reduce the leaf lard remnants in the belly to below 10 gram per each half slaughtered animal, in most treatments as low as only 2-4 gram of leaf lard remnants have been observed at slaughtered animals treated with the leaf lard remnant device as described herein.

The leaf lard remnant removing device described herein can be used for any slaughtered animal where the leaf lard are removed. Preferred is treatment of slaughtered mammals such as for removing leaf lard remnants from slaughtered pigs, cattle, and sheep including rams and lambs. Further preferred is treatment of slaughtered pigs and cattle. Most preferred is treatment of slaughtered pigs.

At slaughterhouses the leaf lard remnant removing device may be used to remove leaf lard remnants in halves of slaughtered animals obtained by dividing entire slaughtered animals by traditional slaughter methods. Preferably the leaf lard remnant removing device is used when the halves of slaughtered animals are hanging in the hind legs and e.g. still connected to each other in the head. Most preferably the leaf lard remnant removing device is used at slaughterhouses with slaughtered animals divided in halves and hanging in hind legs and from which animals the pluck set and the leaf lard are removed.

A leaf lard remnant removing device constructed to handle right and left halves of slaughtered animals following each other at a line in a slaughterhouse may include rotor devices which are reversed i.e. the chute and the screen are reverse constructions and the rotating direction is opposite. The rotating direction of each rotor is from below and upward and then away from the abdominal tissue of the slaughtered animal.

The leaf lard remnant removing device as described herein may further be designed to follow the slaughtered animal or slaughtered animal halves hanging at a slaughter line while the leaf lard remnant removing device removes leaf lard remnants from the slaughtered animal.

In an automated process at a slaughter line with a robot having a leaf lard remnant removing device including two rotors with reversed design for simultaneously treatment of two opposite halves of slaughtered animals at least 100 slaughtered animals per hour can be treated by the robot. At least 200-1000 slaughtered animals per hour can be treated with a system including two rotors. Preferably 600-1000 slaughtered animals per hour can be treated with a system including two rotors.

When treating a slaughtered animal with the leaf lard remnant removing device described herein no water is applied to the slaughtered animal under the treatment. If washing of the device is included, only the device is treated with the water.

Only the tool i.e. preferably the central kernel and/or the lamella blades of the leaf lard remnant removing device is heated to a temperature as described elsewhere herein. The animal under treatment is not heated substantially.

Preferably there are no knives at the rotor of the leaf lard remnant removing device described herein.

### Detailed description of the figures

Fig. 1 illustrates a leaf lard remnant removing device (1) according to the invention described herein. The leaf lard remnant removing device (1) is in a non-working position. The device comprises a rotor (2) with a central kernel (3) having a base end (4) and a front end (5) and lamella blades (6). Motor connecting means (8) connects the rotor (2) to a motor (9). A chute (13) is hinge-connected to a screen (14) such that the chute (13) is moveable when it comes into contact with the abdominal tissue of a slaughtered animal. The washing means (15) is in a non-working position. The washing means (15) is a spraying system which can be moved towards the outer side of the screen (14) for washing the outer side of the screen (14).
Fig. 2 illustrates the rotor (2) and straight lamella blades (6) of the leaf lard remnant removing device (1). Fig 2A illustrates a side view of the rotor (2) with the base end (4) and front end (5) of the central kernel (3) and the lamella blades (6) positioned around the central kernel (3). Fig 2B illustrates the same rotor as in Fig 2A in a slightly twisted position where at the base end (4) of the central kernel different heights of the lamella blades (6) are illustrated. In this Figure every second lamella blade are higher than the neighbor lamella blade. Fig 2C illustrates a rotor (2) which is seen from the front end. The rotor (2) has 24 lamella blades and a possibility of having different profiles of every second lamella blades is illustrated by 'A' and 'B' lamella blades, where the profile of 'A' and 'B' lamella blades are further illustrated in
Fig 2D where 'A' is a lamella blade (6) which is high at the base end and 'B' is a lamella blade (6) which is low at the base end. The lamella blades (6) have a protruding region (7) giving the rotor (2) a shape corresponding to the curvature of the abdominal tissue of slaughtered animals. The lamella blades (6) have a rim (10) which is in contact with the abdominal tissue when the device (1) is in function.
Fig. 3 illustrates cleaning means (12) of the leaf lard remnant removing device (1). Cleaning means (12) is located at the base end (4) of the central kernel (3). Cleaning means (12) may as illustrated here clean 4 lamella blades (6) in one turn when moving along the central kernel (3) pushing the material which stick to the lamella blades (6) towards the front end (5) of the central kernel (3) where it will fell off and be directed downwards by the chute (13). Also motor connecting means (8) and the motor (9) are shown. A screen (14) surrounds part of the rotor (2).

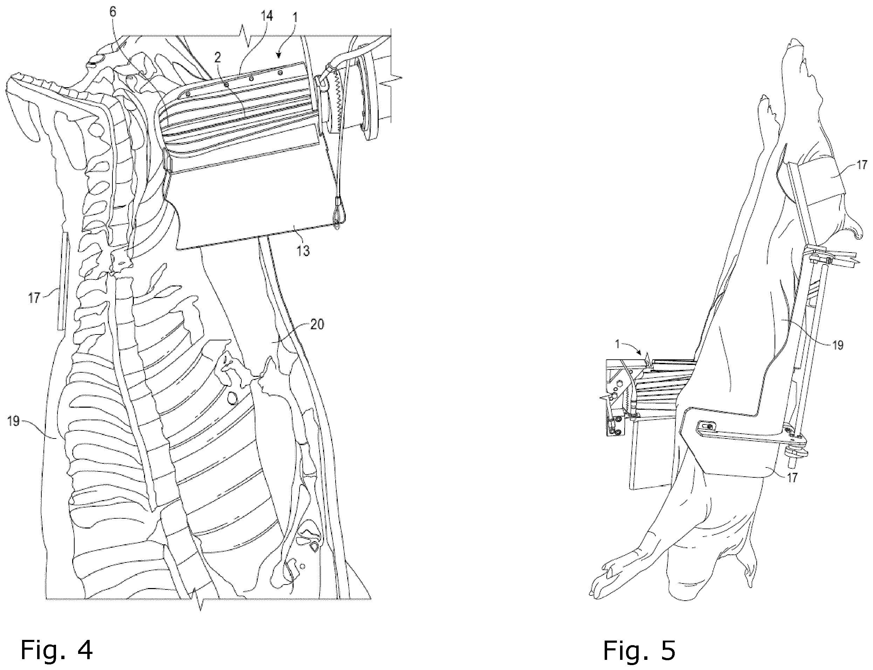

Fig. 4 illustrates the inner side of half a slaughtered pig (19) and the end position in the slaughtered pig of the leaf lard remnant removing device (1) when the leaf lard remnants is being removed. The abdominal cavity of the slaughtered pig has been opened beforehand and the guts and the main part of the abdominal lard or leaf lard has been removed before the leaf lard remnant removing device (1) is used to treat the abdominal tissue (20) to remove any leaf lard remnants. The slaughtered pig is hanging in the hind legs and is supported by a fixture (17). The rotor (2) with lamella blades (6) has removed leaf lard remnants from the abdominal tissue and the leaf lard remnants is directed towards the chute (13) by the screen (14) and further downwards and away from the slaughtered animal.
Fig. 5 illustrates a supported slaughtered pig (19) seen from the skin side and the start position of the leaf lard remnant removing device (1) when removing leaf lard remnants from a pig. Fixtures (17) support the pig close to the front legs and at the ham.

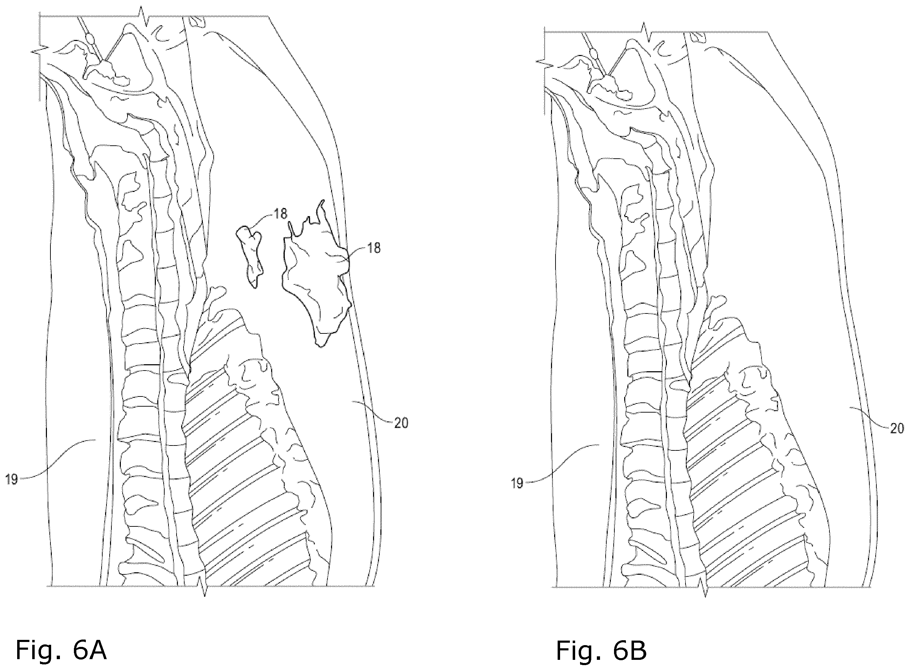

Fig. 6 illustrates the abdominal tissue of a pig with and without leaf lard remnants. The slaughtered pig (19) is hanging in the hind legs. In Figure 6A areas with leaf lard remnants (18) can be seen on the abdominal tissue before treatment with the leaf lard removing device (not shown). Figure 6B illustrates the same animal after treatment with the leaf lard removing device (not shown) and it can be seen that no leaf lard remnants is located at the abdominal tissue (20) of the pig.

### Example

The leaf lard remnant removing device has been tested for removing leaf lard remnants at a Danish abattoir. 431 half-carcasses were treated with the leaf lard remnant removing device connected to an automatic system for directing the leaf lard remnant removing device towards the abdominal tissue of a half-carcass, directing the rotating rotor along the abdominal tissue and returning to a start/end position of the leaf lard remnant removing device being located away from the half-carcass. The average amount of leaf lard remnant being present in the half-carcasses after the treatment was below 2 gram and for 4 % of the half-carcasses the amount of remaining leaf lard remnants was above 10 gram.

### List of Reference Designations

- 1: Leaf lard remnant removing device
- 2: Roto r
- 3: Central kernel
- 4: Base end of central kernel
- 5: Front end of central kernel
- 6: Lamella blade
- 7: Protruding region of lamella blade
- 8: Motor connecting means
- 9: Motor
- 10: Rim of lamella blade
- 11: Heating means (not shown in the Figures)
- 12: Cleaning means
- 13: Chute
- 14: Screen
- 15: Washing means
- 16: System for removing leaf lard remnants (not shown in the Figures)
- 17: Fixture
- 18: Leaf lard remnants
- 19: Slaughtered animal
- 20: Abdominal tissue

## Claims

1. A device (1) for removing abdominal lard remnants or leaf lard remnants (18) from a slaughtered animal (19) or a part thereof, of which the abdominal cavity has been opened beforehand and the main part of the abdominal lard or leaf lard has been removed, which device comprises
at least one rotatable rotor (2), said rotor (2) comprising
a. A longitudinal central kernel (3) with a base end (4) and a front end (5),
b. At least one lamella blade (6) connected to said central kernel (3) with the overall direction of said at least one lamella blade being parallel to the longitudinal central kernel, and such that each lamella blade (6) protrudes from the central kernel (3),
c. where the at least one lamella blade (6) in a region (7) closer to the front end than to the base end of the central kernel protrudes more from the central kernel (3) than at the base end (4) and front end (5) of the central kernel (3) and wherein the at least one lamella blade (6) is arranged to scrape the lard remnants from the carcass,
d. motor connecting means (8) suitable to connect said base end (4) of the central kernel (3) to a motor (9).

2. The device according to claim 1, wherein said at least one lamella blade (6) has a rim (10) which when in function is in contact with the abdominal tissue (20) of the slaughtered animal (19) and wherein said rim (10) is continuous from the base (4) end to the front end (5) of the central kernel (3).

3. The device according to any of the preceding claims, wherein said rotor (2) further comprises heating means (11) for heating said central kernel (3) and/or said lamella blades (6).

4. The device according to any of the preceding claims, said device further comprising cleaning means (12) for removing lard remnants from the lamella blades (6).

5. The device according to any of the preceding claims further comprising a chute (13) located beneath said rotor (2), said chute (13) being capable of directing leaf lard remnants away from the slaughtered animal.

6. The device according to any of the preceding claims further comprising a motor (9) for rotating the rotor (2), and wherein said motor (9) is connected to said motor connecting means (8).

7. A system (16) for removing abdominal lard remnants or leaf lard remnants from at least one slaughtered animal or a part thereof at a slaughter line, where the abdominal cavity of the at least one slaughtered animal has been opened beforehand and the main part of the abdominal lard or leaf lard has been removed, which system (16) comprises
a. The leaf lard remnant removing device (1) according to any of claims 1-6, and
b. a motor (9) for rotating the rotor (2), and wherein said motor (9) is connected to said motor connecting means (8), and
c. a robot for controlling and moving the rotor along the slaughtered animal, and/or
d. animal length determining means for determining the length of a slaughtered animal and/or
e. a fixture (17) to fix or support at least a part of a slaughtered animal.

8. A method for removing leaf lard remnants from a slaughtered animal or a part thereof, of which the abdominal cavity has been opened beforehand and the main part of the abdominal lard or leaf lard has been removed, said method comprising
a. Directing the leaf lard remnant removing device (1) of any of claims 1 to 6 towards the abdominal tissue of a slaughtered animal (19),
b. Moving the rotating rotor (2) in touch with and along the abdominal tissue in the region from where the leaf lard has been removed from the slaughtered animal.

9. The method according to claim8, wherein when removing leaf lard remnants from a slaughtered animal hanging with the head downward,
a. the device (1) is moved from below and upward and
b. the rotating rotor (2) is rotating in a directing such that the lamella blades (6) rotate along the abdominal tissue in a direction corresponding to the overall direction of the movement of the leaf lard remnant removing device (1) such that removed leaf lard remnants are transported by the rotor upward and away from the abdominal tissue.

10. The method according to any of claims 8 to 9, wherein the central kernel (3) and/or the lamella blades (6) are heated.

## Patentansprüche

1. Vorrichtung (1) zur Entfernung von Abdominalschmalzüberresten oder Bauchschmalzüberresten (18) von Schlachttieren (19) oder einem Teil davon, bei denen die Bauchhöhle zuvor geöffnet worden ist und der Hauptanteil des Abdominalschmalzes oder Bauchschmalzes entfernt worden ist, wobei die Vorrichtung umfasst:
mindestens einen drehbaren Rotor (2), wobei der Rotor (2) umfasst:
a. einen längsgerichteten zentralen Kern (3) mit einem Basisende (4) und einem Vorderende (5),
b. mindestens eine Lamellenklinge (6), die mit dem zentralen Kern (3) verbunden ist, wobei die Gesamtrichtung der mindestens einen Lamellenklinge parallel zu dem längsgerichteten zentralen Kern ist, und derart, dass jede Lamellenklinge (6) aus dem zentralen Kern (3) ragt,
c. wobei die mindestens eine Lamellenklinge (6) in einer Region (7), die sich näher an dem Vorderende als an dem Basisende des zentralen Kerns befindet, weiter aus dem zentralen Kern (3) ragt als an dem Basisende (4) und dem Vorderende (5) des zentralen Kerns (3), und wobei die mindestens eine Lamellenklinge (6) so angeordnet ist, dass sie die Schmalzüberreste von der Karkasse kratzt,
d. Motorverbindungsmittel (8), die geeignet sind, um das Basisende (4) des zentralen Kerns (3) mit einem Motor (9) zu verbinden.

2. Vorrichtung nach Anspruch 1,
wobei die mindestens eine Lamellenklinge (6) eine Fassung (10) aufweist, die, wenn sie in Funktion ist, in Kontakt mit dem Abdominalgewebe (20) des Schlachttieres (19) ist, und wobei die Fassung (10) von dem Basisende (4) zu dem Vorderende (5) des zentralen Kerns (3) kontinuierlich ist.

3. Vorrichtung nach einem der vorhergehenden Ansprüche, wobei der Rotor (2) ferner Heizmittel (11) zum Erwärmen des zentralen Kerns (3) und/oder der Lamellenklingen (6) umfasst.

4. Vorrichtung nach einem der vorhergehenden Ansprüche, wobei die Vorrichtung ferner Reinigungsmittel (12) zum Entfernen von Schmalzüberresten von den Lamellenklingen (6) umfasst.

5. Vorrichtung nach einem der vorhergehenden Ansprüche, ferner umfassend eine Rinne (13), die sich unterhalb des Rotors (2) befindet, wobei die Rinne (13) in der Lage ist, Bauchschmalzüberreste von dem Schlachttier weg zu lenken.

6. Vorrichtung nach einem der vorhergehenden Ansprüche, ferner umfassend einen Motor (9) zum Drehen des Rotors (2), und wobei der Motor (9) mit dem Motorverbindungsmittel (8) verbunden ist.

7. System (16) zur Entfernung von Abdominalschmalz-überresten oder Bauchschmalzüberresten von mindestens einem Schlachttier oder einem Teil davon, wobei die Bauchhöhle des mindestens einen Schlachttieres zuvor geöffnet worden ist und der Hauptanteil des Abdominalschmalzes oder Bauchschmalzes entfernt worden ist, wobei das System (16) umfasst:
a. die Bauchschmalzüberrestentfernungsvorrichtung (1) nach einem der Ansprüche 1 bis 6, und
b. einen Motor (9) zum Drehen des Rotors (2), und wobei der Motor (9) mit dem Motorverbindungsmittel (8) verbunden ist, und
c. einen Roboter zum Steuern und Bewegen des Rotors entlang des Schlachttieres, und/oder
d. Tierlängenbestimmungsmittel zum Bestimmen der Länge eines Schlachttieres, und/oder
e. eine Befestigungsvorrichtung (17), um mindestens einen Teil eines Schlachttieres zu befestigen oder zu tragen.

8. Verfahren zur Entfernung von Bauchschmalzüberresten von Schlachttieren oder einem Teil davon, bei denen die Bauchhöhle zuvor geöffnet worden ist und der Hauptanteil des Abdominalschmalzes oder Bauchschmalzes entfernt worden ist, wobei das Verfahren umfasst:
a. Lenken der Bauchschmalzüberrestentfernungsvorrichtung (1) gemäß einem der Ansprüche 1 bis 6 in Richtung des Abdominalgewebes eines Schlachttieres (19),
b. Bewegen des sich drehenden Rotors (2) in Berührung mit und entlang des Abdominalgewebes in der Region, aus der das Bauchschmalz von dem Schlachttier entfernt worden ist.

9. Verfahren nach Anspruch 8, wobei, wenn Bauchschmalzüberreste von einem Schlachttier entfernt werden, das mit dem Kopf nach unten hängt,
a. die Vorrichtung (1) von unten und aufwärts bewegt wird, und
b. der sich drehende Rotor (2) in eine Richtung dreht, so dass die Lamellenklingen (6) entlang des Abdominalgewebes in eine Richtung rotieren, die der Gesamtrichtung der Bewegung der Bauchschmalzüberrestentfernungsvorrichtung (1) entspricht, so dass entfernte Bauchschmalzüberreste durch den Rotor aufwärts und von dem Abdominalgewebe weg transportiert werden.

10. Verfahren nach einem der Ansprüche 8 bis 9, wobei der zentrale Kern (3) und/oder die Lamellenklingen (6) erwärmt werden.

## Revendications

1. Dispositif (1) pour enlever le lard abdominal résiduel ou le lard de panne résiduel (18) d'un animal abattu (19) ou d'une partie de celui-ci, dont la cavité abdominale a été ouverte auparavant et la partie principale du lard abdominal ou du lard de panne a été enlevée, ledit dispositif comprenant:
au moins un rotor rotatif (2), ledit rotor (2) comprenant:
a. un noyau central longitudinal (3) présentant une extrémité de base (4) et une extrémité avant (5),
b. au moins une lame en lamelle (6) connectée audit noyau central (3), dans lequel la direction générale de ladite au moins une lame en lamelle est parallèle au noyau central longitudinal, et de telle sorte que chaque lame en lamelle (6) fasse saillie à partir du noyau central (3),
c. dans lequel ladite au moins une lame en lamelle (6) dans une région (7) plus proche de l'extrémité avant que de l'extrémité de base du noyau central fait davantage saillie à partir du noyau central (3) qu'à l'extrémité de base (4) et l'extrémité avant (5) du noyau central (3), et dans lequel ladite au moins une lame en lamelle (6) est agencée pour détacher le lard résiduel de la carcasse, et
d. des moyens de connexion de moteur (8) appropriés pour connecter ladite extrémité de base (4) du noyau central (3) à un moteur (9).

2. Dispositif selon la revendication 1, dans lequel ladite au moins une lame en lamelle (6) présente un bord (10) qui, lors de l'utilisation, est en contact avec le tissu abdominal (20) de l'animal abattu (19), et dans lequel ledit bord (10) est continu à partir de l'extrémité de base (4) jusqu'à l'extrémité avant (5) du noyau central (3).

3. Dispositif selon l'une quelconque des revendications précédentes, dans lequel ledit rotor (2) comprend en outre des moyens de chauffage (11) pour chauffer ledit noyau central (3) et/ou lesdites lames en lamelle (6).

4. Dispositif selon l'une quelconque des revendications précédentes, dans lequel ledit dispositif comprend en outre des moyens de nettoyage (12) pour enlever le lard résiduel des lames en lamelle (6) .

5. Dispositif selon l'une quelconque des revendications précédentes, comprenant en outre un goulotte (13) située en-dessous dudit rotor (2), ladite goulotte (13) étant capable de diriger le lard de panne résiduel à l'écart de l'animal abattu.

6. Dispositif selon l'une quelconque des revendications précédentes, comprenant en outre une moteur (9) pour faire tourner le rotor (2), et dans lequel ledit moteur (9) est connecté auxdits moyens de connexion de moteur (8).

7. Système (16) pour enlever le lard abdominal résiduel ou le lard de panne résiduel à partir dudit au moins un animal abattu ou d'une partie de celui-ci sur une ligne d'abattage, dans lequel la cavité abdominale dudit au moins un animal abattu a été ouverte auparavant et la partie principale du lard abdominal ou du lard de panne a été enlevée, ledit système (16) comprenant
a. le dispositif d'enlèvement de lard de panne résiduel (1) selon l'une quelconque des revendications 1 à 6, et
b. un moteur (9) pour faire tourner le rotor (2), et dans lequel ledit moteur (9) est connecté auxdits moyens de connexion de moteur (8), et
c. un robot pour commander et déplacer le rotor le long de l'animal abattu, et/ou
d. des moyens de détermination de la longueur d'animal pour déterminer la longueur d'un animal abattu et/ou
e. un dispositif de fixation (17) pour fixer ou supporter au moins un partie d'un animal abattu.

8. Procédé pour enlever le lard de panne résiduel d'un animal abattu ou d'une partie de celui-ci, dont la cavité abdominale a été ouverte auparavant et dont la partie principale du lard abdominal ou du lard de panne a été enlevée, ledit procédé comprenant les étapes suivantes:
a. diriger le dispositif d'enlèvement de lard de panne résiduel (1) selon l'une quelconque des revendications 1 à 6 en direction du tissu abdominal d'un animal abattu (19), et
b. déplacer le rotor rotatif (2) en contact avec et le long du tissu abdominal dans la région de laquelle le lard de panne a été enlevé de l'animal abattu.

9. Procédé selon la revendication 8, dans lequel, lors de l'enlèvement du lard de panne résiduel d'un animal abattu suspendu avec la tête en bas,
a. le dispositif (1) est déplacé de bas en haut, et
b. le rotor rotatif (2) tourne dans une direction telle que les lames en lamelle (6) tournent le long du tissu abdominal dans une direction qui correspond à la direction générale du déplacement du dispositif d'enlèvement de lard de panne résiduel (1) de telle sorte que le lard de panne résiduel enlevé soit transporté par le rotor vers le haut et à l'écart du tissu abdominal.

10. Procédé selon l'une quelconque des revendications 8 à 9, dans lequel le noyau central (3) et/ou les lames en lamelle (6) est (sont) chauffé(es).
